# EUROPEAN PATENT SPECIFICATION

(11) **EP 3 044 557 B1**
(45) Date of publication and mention of the grant of the patent: **23.08.2017**
(21) Application number: 14790362.9
(22) Date of filing: 04.09.2014
(51) Int. Cl.: G01L 5/06

(54) **TENSIONING AND TENSION MEASURING DEVICE OF AT LEAST ONE ROPE**
SPANNVORRICHTUNG UND SPANNUNGSMESSVORRICHTUNG FÜR MINDESTENS EIN SEIL.
DISPOSITIF DE TENSIONNEMENT ET DE MESURE DE TENSION D'AU MOINS UNE CORDE

(30) Priority: 13.09.2013 IT TO20130749
(43) Date of publication of application: 20.07.2016
(73) Proprietor: Kite Gen Research S.R.L., 10099 San Mauro Torinese (TO) (IT)
(72) Inventor: IPPOLITO Massimo, I-10099 San Mauro Torinese (TO) (IT)
(74) Representative: Garavelli, Paolo
(86) International application number: PCT/IT2014/000234
(87) International publication number: WO 2015/037027

(56) References cited:
- GB-A- 875 508
- GB-A- 2 489 427
- JP-A- S56 110 031
- US-A- 5 892 157

## Description

The present invention refers to a tensioning and tension measuring device of at least one rope.

Several application fields are known in which it is necessary to automatically tension and measure the tension to which a rope is subjected. One of such application fields deals with the electric energy wind generators which exploit the flight of such kites like those disclosed, for example, in GB 248 94 27, WO2008004261, WO2007122650, EP1672214, WO2008120257: in particular, in such generators it is necessary to automatically control the flight of the power kite, such as, for example a kite-surf, through the respective control ropes and suitable winches or other traction/release mechanisms of such ropes, such as for example driving pulleys, of such kites.

In the above applications, the traction variations of the rope must be continuously monitored to offer to the control system information in real time to drive the rotation of the driving pulleys or of the winches in order to settle and dynamically limit the force on the ropes themselves.

Object of the present invention is solving the prior art problems, by providing a device capable both of measuring in real time and with continuity the tension to which at least one rope is subjected, and of constantly keeping tensioned the rope itself, in order to avoid the accumulation of slack of a such rope under its loosened condition.

The above and other objects and advantages of the invention, as will result from the following description, are obtained by a tensioning and tension measuring device of at least one rope as claimed in Claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention, as appears fro the enclosed claims.

The present invention will be better described by some preferred embodiments thereof, provided as a non-limiting example, with reference to the enclosed drawings, in which:
- Figure 1 shows a side and sectional view of a preferred embodiment of the device according to the present invention in an operating position thereof;
- Figure 2 shows a side and sectional view of the device according to the present invention in another operating position thereof;
- Figure 3 shows a side and sectional view of the device according to the present invention in still another operating position thereof; and
- Figure 4 shows an enlarged perspective view of the device in its operating position of Figure 3.

With reference to the Figures, it is possible to note that a tensioning and tension-measuring device 1 of at least one rope 3 according to the present invention comprises:
- at least one first supporting means 5a of a first end 3a of such rope 3, such first end 3a being connected, for example, to at least one tractioning and/or releasing system of such rope 3 (not shown, such as, for example, a winch or the like);
- at least one second supporting means 5b of a second end 3b of such rope 3, such second end 3b being connected to a working load (not shown, such as, for example, a power kite of a prior art wind generator);
- at least one mobile tensioning means equipped with at least one third supporting means 5c of an intermediate section 3c of such rope 3 interposed between the first 5a the second 5b supporting means, the intermediate section 3c being included between the first end 5a and the second end 3b of the rope 3, such third supporting means 5c of the mobile tensioning means being taken in compression of such intermediate section 3c of the rope 3 through the action of at least one elastic means 6;
- at least one measuring means (not shown) adapted to measure at least one value χ of a linear distance d or an angular distance α included between a reference point and a position of such measuring means, and to send such value χ to at least one processing means adapted to indirectly compute a value σ of tension of the rope 3 through a function σ = f(χ, k), where k is the elastic coefficient of such elastic means 6.

Advantageously, such processing means can operatively cooperate with at least one control means (not shown), such as, for example, a direct current motor or other means, adapted to receive driving signals from such processing means in order to adjust such tractioning and/or releasing system fastened to the first end 3a of the rope 3, for example in order to stabilize the tension value to which the rope 3 itself is subjected.

Preferably, such mobile tensioning means is composed of at least one tensioning lever 4 oscillating around its own rotation axis 4c and such measuring means is at least one inclination meter adapted to measure at least one value χ of the angle of the angular distance α included between a reference point and an angular position of such tensioning lever 4, and to send such value χ to such processing means adapted to indirectly compute the value σ of tension of the rope 3 through the function σ = f(χ, k), where k is the elastic coefficient of the elastic means 6 and χ = α.

Preferably, each one of the first 5a, second 5b and third 5c supporting means is composed of a respective pulley, or other similar means, preferably rotating around its own rotation axis 10a, 10b, 10c to enable the sliding of the rope 3 along both rotation directions of such mezzi 5a, 5b and 5c.

The device 1 according to the present invention can further comprise at least one braking means 8, preferably comprising a plurality of toothed elements, preferably shaped as a parallelepiped, arranged perpendicular to the rope 3, such braking means 8 being adapted to block through contact and/or friction at least the intermediate section 3c of the rope 3 under the compression action of the third supporting means 5c against the braking means 8 under the action of the elastic means 6.

The device 1 according to the present invention can further comprise at least one supporting structure 5 whose material, shape and sizes are suitable for supporting at least the braking means 8 (preferably integrated into such struttura 5), of the supporting means 5a, 5b and of the mobile tensioning means.

Obviously, the elastic means 6 can be, for example, a helical torsional spring, or a coil torsional spring or other functionally similar means: for example, such elastic means 6 can comprise at least one central body 6a, at least one first stem 6c perpendicular to such central body 6a physically connected to the supporting structure 5 through at least one hole 9 whose sizes are compatible with the first stem 6c, and at least one second stem 6b connected to the mobile tensioning means, and in particular to the tensioning lever 4.

Moreover, preferably, the tensioning lever 4 is equipped with at least one first recess adapted to enable inserting at least one rotation pin coaxial with the rotation axis 4c and the central body 6a of the elastic means 6, and of at least one second recess adapted to enable inserting the second stem 6b of the elastic means 6 for connecting the elastic means 6 with the tensioning lever 4.

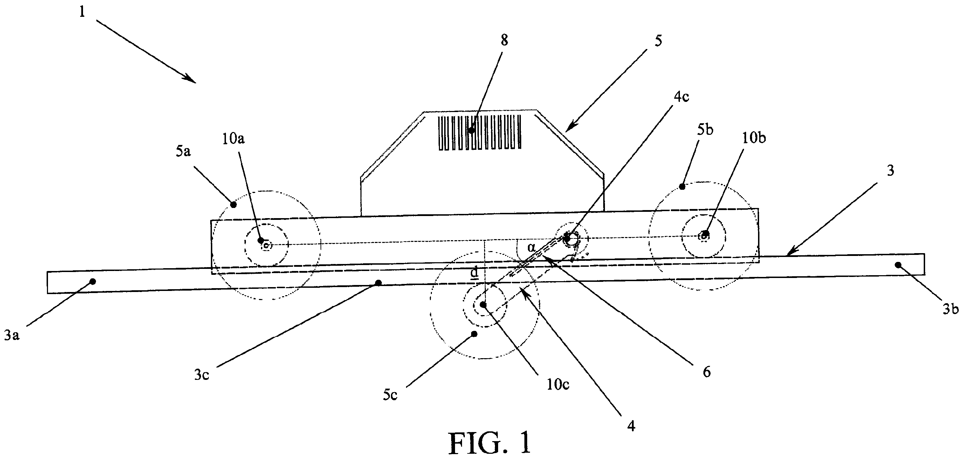

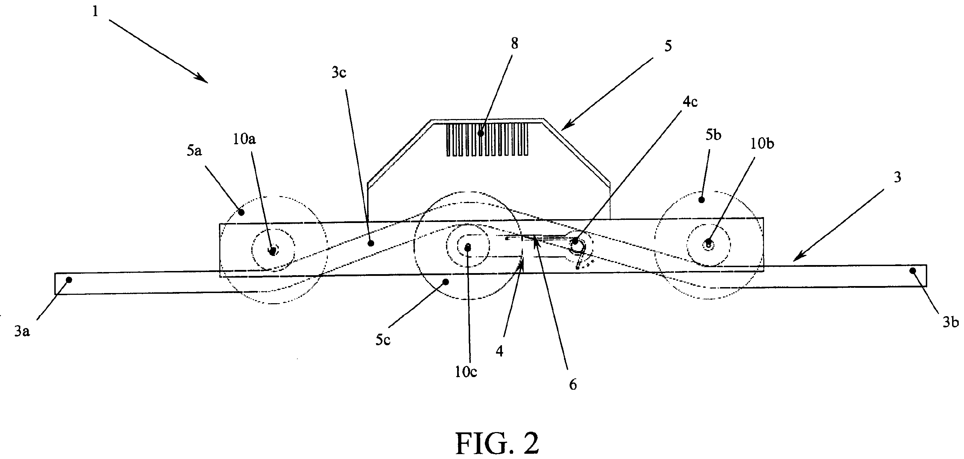

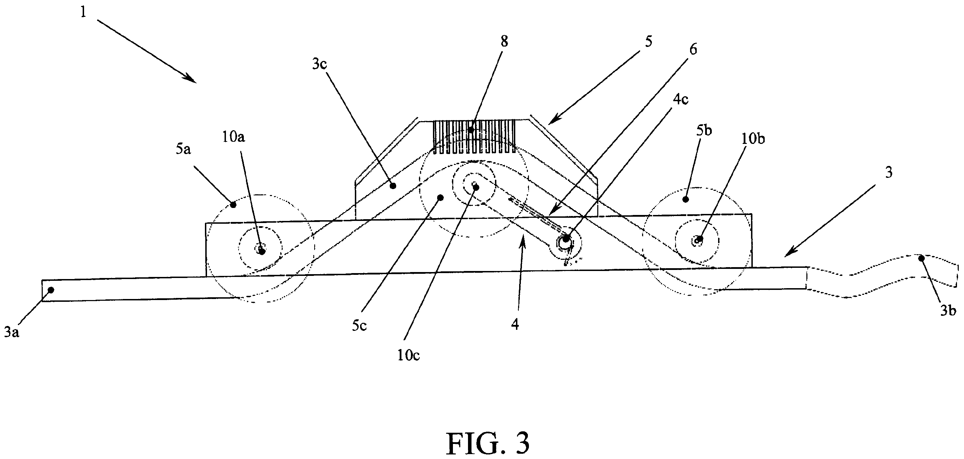

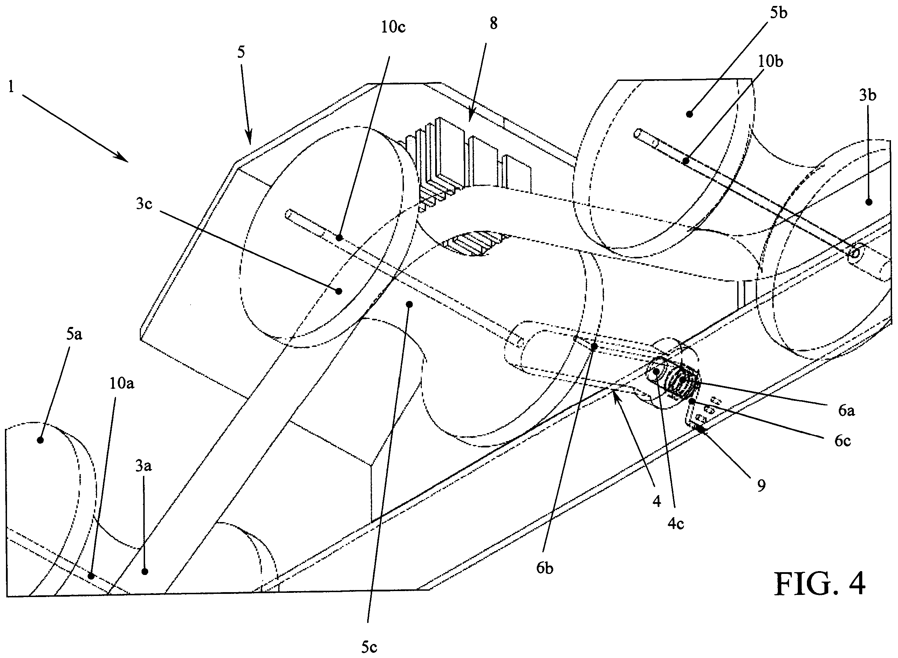

A preferred example of the operation of a device 1 according to the present invention is described below:
- as shown in Figure 1, the rope 3 is subjected to a maximum tensional value conseguently to at least one load fastened to the second end 3b of the rope 3, such rope 3 being in a maximum tensional phase which exceeds the maximum elastic force applied by the elastic means 6 on the intermediate section 3c of the rope 3: under such situation, the mobile tensioning means, and in particular the tensioning lever 4, assume a position corresponding to a maximum tensional value of the rope 3 and related to a value χ of linear or angular distance (and in particular with angle α) from the reference point which is measured by the measuring means and sent to the processing means, which can indirectly compute the corresponding maximum tensional value σ to which the rope 3 is subjected, and possibly send a corresponding control command to the control means to adjust the tractioning and/or releasing system connected to the first end 3a of the rope 3, stabilizing such maximum tensional value to which the rope 3 is subjected;
- as shown in Figure 2, the rope 3 is subjected to a tensional value which is less than the maximum tensional value consequently to a decrease of the load fastened to the second end 3b of the rope 3, such rope 3 being therefore in a tensional phase lower than the maximum one, which can be at least exceeded by the maximum elastic force from the elastic means 6, generating the flexure of the intermediate section 3c between the first 5a and the second 5b supporting means, inducing a displacement of the mobile tensioning means towards the braking means 8, and keeping the rope 3 tensioned: under such situation, the mobile tensioning means, and in particular the tensioning lever 4, assume a position corresponding to an intermediate tensional value of the rope 3 and related to a corresponding distance value from the reference point, which is measured by the measuring means and sent to the processing means, which can indirectly compute the corresponding tensional value σ and possibly, through such control means, adjust the tractioning and/or releasing system connected to the first end 3a of the rope 3 to avoid the possible slack phenomenon of the rope 3;
- as shown in Figures 3 and 4, the rope 3 is subjected to an almost null tensional value consequently to at least one drop of the load fastened to the second end 3b of the rope 3, the elastic force exerted by the elastic means 6 being therefore able to exceed the tensional force of the intermediate section 3c of the rope 3 itself: under such situation, the elastic means 6 take the mobile tensioning means, and in particular the related supporting means 5c, to compress the intermediate section 3c of the rope 3 against the braking means 8, blocking the sliding of the rope 3 between the first 5a and the second 5b supporting means, avoiding the slack phenomenon of the rope 3 and possibly keeping at least the first end of such rope 3 in a non-null tensional phase. In this case, the mobile tensioning means, and in particular the tensioning lever 4, assume a position corresponding to a null tensional value of the rope 3 and related to a corresponding distance value from the reference point which is measured by the measuring means and sent to the processing means, which can indirectly compute the corresponding tensional value σ and possibly, through the control means, take care of stopping the tractioning and/or releasing system.

The invention has the following advantages:
- performing an accurate and real-time measure of the tension values to which the rope is subjected;
- avoiding the slack phenomenon with following release and twisting of the rope;
- allowing an accurate measure also of small tension values to which the rope is subjected;
- allowing an accurate measure when the load to which the rope is subjected suddently becomes of such entity as to require a quick and efficient measure of the sudden tension variation to which the rope is subjected.

## Claims

1. Tensioning and tension-measuring device (1) of at least one rope (3) for electric energy wind generators, comprising:
- at least one first supporting means (5a) arranged to support a first end (3a) of said rope (3);
- at least one second supporting means (5b) arranged to support a second end (3b) of said rope (3), said second end (3b) being connectable to a working load;
- at least one mobile tensioning means equipped with at least one third supporting means (5c) arranged to support an intermediate section (3c) of said rope (3) interposed between said first (5a) and said second (5b) supporting means, said intermediate section (3c) being arranged to be included between said first end (5a) and said second end (3b) of said rope (3), said third supporting means (5c) of said mobile tensioning means being arranged to be taken in compression of said intermediate section (3c) of said rope (3) through the action of at least one elastic means (6);
- at least one measuring means, adapted to measure at least one value χ of a linear distance d or an angular distance α included between a reference point and a position of said measuring means and to send said value χ to at least one processing means adapted to indirectly compute a value σ of tension of said rope (3) through a function σ = f(χ, k), where k is an elastic coefficient of said elastic means (6),
**characterized in that** said mobile tensioning means is composed of at least one tensioning lever (4) oscillating around its own rotation axis (4c) and said measuring means is at least one inclination meter adapted to measure at least one of said values χ of an angle of said angular distance α included between said reference point and an angular position of said tensioning lever (4) and to send said value χ to said processing means adapted to indirectly compute said value σ of tension of said rope (3) through said function σ = f(χ, k), where k is said elastic coefficient of said elastic means (6) and χ = α, and
**in that** it comprises at least one braking means (8) adapted to block by contact and/or friction at least said intermediate section (3c) of said rope (3) under the compression action of said third supporting means (5c) against said braking means (8) under the action of said elastic means (6).

2. Device (1) according to the previous claim, **characterized in that** said first end (3a) is connected to at least one tractioning and/or releasing system of said rope (3) and said processing means operatively cooperate with at least one control means adapted to receive driving signals from said processing means to adjust said tractioning and/or releasing system fastened to said first end (3a) of said rope (3).

3. Device (1) according to claim 1, **characterized in that** each one of said first (5a), second (5b) and third (5c) supporting means is composed of a respective pulley rotating around its own rotation axis (10a, 10b, 10c).

4. Device (1) according to any one of the previous claims, **characterized in that** said braking means (8) comprise a plurality of toothed elements arranged perpendicularly to said rope (3).

## Patentansprüche

1. Spann- (1) und Spannungsmessvorrichtung von mindestens einem Seil (3) für Windgeneratoren von elektrischer Energie, die Folgendes enthält:
- mindestens eine Stützvorrichtung (5a), die so angebracht ist, dass sie ein erstes Ende (3a) des genannten Seils (3) trägt;
- mindestens eine zweite Stützvorrichtung (5b), die so angebracht ist, dass sie ein zweites Ende (3b) des genannten Seils (3) trägt, das genannte zweite Ende (3b) kann mit einer Nutzlast verbunden werden;
- mindestens eine bewegliche Spannvorrichtung, die mit mindestens einer dritten Stützvorrichtung (5c) ausgestattet ist, die so angeordnet ist, dass sie einen Zwischenabschnitt (3c) des genannten Seils (3) trägt, der zwischen der ersten (5a) und der zweiten (5b) Stützvorrichtung liegt, der genannte Zwischenabschnitt (3c) ist so angeordnet, dass er zwischen dem genannten ersten Ende (5a) und dem genannten zweiten Ende (3b) des genannten Seils (3) liegt, die genannte dritte Stützvorrichtung (5c) der genannten beweglichen Spannvorrichtung ist so angeordnet, dass sie durch die Wirkung von mindestens einer elastischen Vorrichtung (6) im genannten Zwischenabschnitt (3c) komprimiert wird;
- mindestens eine Messvorrichtung, die dazu dient, mindestens einen Wert χ eines Linearabstands d oder eines Winkelabstands α zwischen einem Bezugspunkt und einer Position der genannten Messvorrichtung zu messen und den genannten Wert χ an mindestens ein Verarbeitungsgerät zu senden, das dazu dient, indirekt einen Spannungswert σ des genannten Seils (3) durch eine Funktion σ = f(χ, k) zu berechnen, wo k ein elastischer Koeffizient der genannten elastischen Vorrichtung (6) ist
die **dadurch gekennzeichnet ist, dass** die genannte bewegliche Spannvorrichtung aus mindestens einem Spannhebel (4) besteht, der um seine Drehachse (4c) schwingt, und dass die genannte Messvorrichtung mindestens ein Inklinometer ist, der dazu dient, mindestens einen der genannten Werte χ eines Winkels des genannten Winkelabstands α zwischen dem genannten Bezugspunkt und einer Winkelposition des genannten Spannhebels (4) zu messen und den genannten Wert χ an das genannte Verarbeitungsgerät zu senden, das dazu dient, indirekt den genannten Spannungswert σ des genannten Seils (3) durch die genannte Funktion σ = f(χ, k) zu berechnen, wo k der genannte elastische Koeffizient der genannten elastischen Vorrichtung (6) und χ = α ist, und
dadurch, mindestens eine Bremsvorrichtung (8) einzuschließen, die dazu dient, durch Kontakt und/oder Reibung mindestens den genannten Zwischenabschnitt (3c) des genannten Seils (3) unter der Kompressionswirkung der genannten dritten Stützvorrichtung (5c) gegen diese genannte Bremsvorrichtung (8) unter der Wirkung der genannten elastischen Vorrichtung (6) zu blockieren.

2. Vorrichtung (1) gemäß dem vorhergehenden Patentanspruch, die **dadurch gekennzeichnet ist, dass** das genannte erste Ende (3a) mit mindestens einem Traktions- und/oder Freigabesystem des genannten Seils (3) verbunden ist, und dass das genannte Verarbeitungsgerät aktiv mit mindestens einer Steuervorrichtung zusammenarbeitet, die dazu dient, Steuersignale vom genannten Verarbeitungsgerät zu empfangen, um das genannte Traktions- und/oder Freigabesystem zu regulieren, das am genannten ersten Ende (3a) des genannten Seils (3) befestigt ist.

3. Vorrichtung (1) gemäß Patentanspruch 1, die **dadurch gekennzeichnet ist, dass** jede der genannten ersten (5a), zweiten (5b) und dritten (5c) Stützvorrichtungen aus einer entsprechenden Riemenscheibe besteht, die sich um ihre Drehachse (10a, 10b, 10c) dreht.

4. Vorrichtung (1) gemäß einem beliebigen der vorhergehenden Patentansprüche, die **dadurch gekennzeichnet ist, dass** die genannte Bremsvorrichtung (8) mehrere Zahnelemente enthält, die senkrecht zum genannten Seil (3) angeordnet sind.

## Revendications

1. Dispositif (1) de tensionnage et de mesure de la tension d'un câble (3) pour générateurs éoliens d'énergie électrique, comprenant :
- un premier moyen de support (5a) positionné de sorte à supporter la première extrémité (3a) du câble (3) ;
- un second moyen de support (5b) positionné de sorte à supporter la seconde extrémité (3b) du câble (3) ; cette seconde extrémité (3b) peut être reliée à une charge utile ;
- un moyen mobile de tensionnage doté d'un troisième moyen de support (5c) positionné de sorte à supporter un morceau intermédiaire (3c) du câble (3) placé entre le premier (5a) et le second (5b) moyen de support ; le morceau intermédiaire (3c) est positionné de sorte à être comprimé entre la première extrémité (5a) et la seconde extrémité (3b) du câble (3) ; le troisième moyen de support (5c) est positionné de sorte à subir une compression contre le morceau intermédiaire (3c) du câble (3) sous l'action d'un moyen élastique (6) ;
- un moyen de mesure, apte à mesurer une valeur χ d'une distance linéaire d ou d'une distance angulaire α comprise entre un point de référence et une position du moyen de mesure mais également apte à envoyer la valeur χ à un dispositif de traitement en mesure de calculer de manière indirecte une valeur σ de tension du câble (3) à travers la fonction σ = f(χ, k), où k est un coefficient élastique du moyen élastique (6),
**caractérisé en ce que** le moyen mobile de tensionnage est composé d'un levier de tension (4) basculant autour de son axe de rotation (4c) et **en ce que** le moyen de mesure est constitué d'un inclinomètre apte à mesurer l'une des valeurs χ d'un angle de la distance angulaire α comprise entre le point de référence et une position angulaire du levier de tension (4) mais aussi apte à envoyer la valeur χ à un dispositif de traitement en mesure de calculer de manière indirecte la valeur σ de tension du câble (3) à travers la fonction σ = f(χ, k), où k est le coefficient élastique du moyen élastique (6) et χ = α, e
caractérisé également **en ce qu'**il comprend au moins un moyen de freinage (8) en mesure de bloquer par contact et/ou frottement un morceau intermédiaire (3c) du câble (3) à travers la compression du troisième moyen de support (5c) contre le moyen de freinage (8) sous l'action d'un moyen élastique (6).

2. Dispositif (1), selon la revendication 1, **caractérisé en ce que** la première extrémité (3a) est reliée à un système de traction et/ou de relâche du câble (3) et **en ce que** le dispositif de traitement coopère opérationnellement avec un moyen de contrôle apte à recevoir les signaux de commande du dispositif de traitement pour régler le système de traction et/ou de relâche qui est fixé à la première extrémité (3a) du câble (3).

3. Dispositif (1), selon la revendication 1, **caractérisé en ce que** le premier (5a), le second (5b) et le troisième (5c) moyen de support sont dotés chacun d'une poulie tournant autour de son axe de rotation (10a, 10b, 10c).

4. Dispositif (1) selon l'une des revendications précédentes, **caractérisé en ce que** le moyen de freinage (8) comprend une pluralité d'éléments dentés perpendiculaires par rapport au câble (3).
